# EUROPÄISCHE PATENTANMELDUNG

(11) **EP 0 882 928 A2**
(43) Veröffentlichungstag der Anmeldung: **09.12.1998**
(21) Anmeldenummer: 98110121.5
(22) Anmeldetag: 03.06.1998
(51) Int. Cl.: F16L 49/02, F16L 21/03, E04F 17/02

(54) **Kamin-Rauchrohr aus Muffenrohr-Abschnitten und deren Abdichtung**

(30) Priorität: 06.06.1997 DE 29709874 U
(71) Anmelder: ERLUS BAUSTOFFWERKE AG, 84088 Neufahrn (DE)
(72) Erfinder: Interwies, Jan, 84034 Landshut (DE); Weigl, Franz, 84069 Schierling (DE)
(74) Vertreter: Lohrentz, Franz, Dipl.-Ing.

(57) **Zusammenfassung**

Ein Rauchrohr eines Kamins, das aus insbesondere keramischen Muffenrohr-Abschnitten (1) aufgebaut ist, wobei die Muffenrohr-Abschnitte an ihren Verbindungsstellen durch eine erste Dichtung (5) in der sich radial erstreckenden Fuge (8) zwischen dem Muffengrund (4) und dem Rand (7) des Spitzendes (3) und durch eine zweite Dichtung aus einem elastomeren Marterial in dem Ringspalt (16) zwischen der Muffeninnenwand (6) und dem Spitzende (3) abgedichtet sind. Dabei ist die erste Dichtung ein Dichtring aus einem wärmebeständigen Fasermaterial und die zweite Dichtung eine Lippendichtung mit mindestens einer den Ringspalt überbrückenden Dichtlippe.

## Beschreibung

Die Erfindung betrifft ein Rauchrohr eines Kamins, das aus insbesondere keramischen Muffenrohr-Abschnitten aufgebaut ist und die Merkmale gemäß dem Oberbegriff des Anspruches 1 aufweist.

Bei einem bekannten Rauchrohr der vorstehend angegebenen Art (DE 44 43 603 A1) ist die jeweilige Verbindungsstelle zwischen zwei aufeinander folgenden Muffenrohr-Abschnitten durch Dichtungen unterschiedlicher Art abgedichtet, nämlich in der Fuge zwischen dem Muffengrund und dem Stirnrand des nächstfolgenden Rohrabschnitts mittels Fugenkitt und in dem axialen Ringspalt zwischen der Innenwand der Muffe und dem Endabschnitt (Spitzende) des nächstfolgenden Muffenrohrs durch einen Dichtring aus elastomerem Material. Der Dichtring ist in einer seinem kreisförmigen oder viereckigen Querschnitt angepaßten Ringnut am Spitzende aufgenommen.

Dieses bekannte Rauchrohr bereitet beim Zusammensetzen der Muffenrohr-Abschnitte Schwierigkeiten. Um die angestrebte Dichtfunktion zu erfüllen, muß der elastomere Dichtring in der Größe seines Querschnitts so bemessen sein, daß er bei allen zu erwartenden Toleranzverhältnissen Muffe/Spitzende den axialen Ringspalt überbrücken und dichtend an der Muffeninnenwand anliegen kann. Insbesondere bei keramischen Werkstoffen sind jedoch aufgrund der durch das Brennen auftretenden Schwindung beträchtlich schwankende Ringspaltbreiten zu erwarten. Wenn daher der Dichtringquerschnitt so bemessen ist, daß bei maximaler Riingspaltbreite der Dichtring an der Muffeninnenwand noch anliegen kann und leicht zu Dichtzwecken komprimiert wird, dann läßt sich bei einem Zusammentreffen der Durchmessertoleranzen von Muffe und Spitzende so, daß der Ringspalt eine erheblich geringere Breite erhält, das Spitzende in die Muffe nicht mehr einfügen, weil sich der Dichtring am oberen Muffenrand dagegen sperrt. Je nach der Härte des verwendeten elastomeren Materials kann es auch vorkommen, daß der Dichtring bei den geschilderten Durchmesserverhältnissen durch das Anstoßen an dem oberen Muffenrand aus seiner Nut herausgequetscht wird, außerhalb der Muffe verbleibt und daher den angestrebten Dichteffekt jedenfalls nicht in dem gewünschten Ausmaß erreicht. Um solche unerwünschte Vorgänge bei der Rauchrohrmontage zu vermeiden, ist es daher notwendig, den Querschnitt des Dichtrings kleiner zu bemessen. Dann besteht aber die Gefahr, daß bei maximal breitem Ringspalt kein Kontakt mehr mit der Muffenrohrinnenwand entsteht. In diesem Fall wird die Abdichtung verschlechtert und die so miteinander verbundenen Muffenrohr-Abschnitte können durch im Betrieb unvermeidbare Seitenkräfte sich relativ zueinander bewegen. Hierdurch erhält die durch den ausgehärteten Fugenkitt am Muffengrund hergestellte Dichtung rasch Risse, so daß die Dichtung zwischen Spitzende und Muffe insgesamt unwirksam werden kann. Seitliche Kräfte treten beim Betrieb eines Schornsteins insbesondere in den Fällen auf, in denen der Schornstein in Verbindung mit Niedertemperatur-Heizgeräten (z. B. Brennwertgeräten) betrieben wird, da diese mit Überdruck arbeiten und beim Einschalten einen beträchtlichen Impuls in Querrichtung auf das Rauchrohr ausüben.

Die erste Dichtung in der Fuge zwischen dem Stirnrand des Spitzendes und dem Muffengrund erfordert es weiterhin, den Fugenkitt vor dem Einschieben des Spitzendes in die Muffe auf den Muffengrund aufzutragen. Dies muß sorgfältig und in ausreichender Menge geschehen, damit eine Abdichtung auf dem ganzen Umfang gewährleistet ist.

Weiterhin ist auch bereits eine Abdichtung für ein aus Muffenrohr-Abschnitten aufgebautes Rauchrohr bekannt, bei dem in der Fuge zwischen dem Muffengrund und dem Stirnrand des Spitzendes ein Dichtring aus Mineral- oder Keramikfasern eingelegt ist und der axiale Ringspalt durch eine zylindrische Dichtung aus dem gleichen Material ausgefüllt ist. Die Dichtung ist gepreßt oder gebacken, wobei der zylindrische Teil davon eine Führung beim Einfügen des Spitzendes bilden soll (DE 295 10 018 U). Auch bei dieser Art von Abdichtung treten an der zylindrischen Abdichtführung die vorstehend beschriebenen Fügeprobleme auf.

Der Erfindung liegt daher die Aufgabe zugrunde, die Verbindungsstelle der Muffenrohr-Abschnitte als leicht fügbare reine Steckverbindung auszubilden, die bei der Montage lediglich ein Ineinanderstecken der Muffenrohr-Abschnitte zum Aufbau des Rauchrohrs erfordert und trotzdem bleibende Dichtheit im Betrieb gewährleistet.

Dies wird erfindungsgemäß durch die Ausgestaltung nach dem Anspruch 1 erreicht.

Durch die Verwendung einer elastomeren Lippendichtung anstelle eines Dichtrings ist es möglich, den ganzen Schwankungsbereich der Ringspaltbreite so zu erfassen, daß auch bei einem ungünstigen Zusammentreffen der Durchmessertoleranzen von Muffe und Spitzende, die zur maximalen Ringspaltbreite führen, eine einwandfreie Abdichtung des Spitzendes erzielbar ist. Dabei bereitet aber das Einfügen des Spitzendes auch bei minimaler Ringspaltbreite kein Problem, weil in diesem Fall die Dichtlippe (oder mehrere Dichtlippen) lediglich stärker abgebogen werden und sich an den Außenumfang des Spitzendes dichtend anlegen, ohne daß dadurch die Fügekraft erheblich erhöht wird oder die Lippendichtung in die Muffe hineingezogen wird. Allerdings erlaubt auch die Lippendichtung, insbesondere bei größerer Ringspaltbreite, eine gewisse seitliche Beweglichkeit der zusammengefügten Muffenrohr-Abschnitte, jedoch wird dadurch die Abdichtung am Muffengrund deshalb nicht beeinträchtigt, weil der am Muffengrund liegende Dichtring aus Fasermaterial hinreichend elastisch ist, um auch bei leichten Kippbewegungen des Spitzendes mit dessen Stirnrand in Dichtkontakt zu bleiben. Erfindungsgemäß wird somit bewußt eine gewisse Beweglichkeit im Bereich der oberen Abdichtung nahe dem Muffenrand in Kauf genommen, um Schwierigkeiten beim Fügevorgang zu vermeiden, ohne daß dadurch die Abdichtung im Muffengrund verschlechtert wird.

Dadurch, daß die Dichtung auf dem Muffengrund als Dichtring ausgebildet ist, braucht weiterhin dieser bei dem Aufbau des Rauchrohrs lediglich in die Muffe eingelegt zu werden. Da er zweckmäßigerweise auf die Abmessungen des Muffengrundes abgestimmt ist, ist keine Sorgfalt nötig, die gewünschte Abdichtung zwischen Muffengrund und Spitzende-Stirnrand zu erzielen. Noch weiter vereinfacht wird die Montage dann, wenn der Dichtring von vornherein auf dem Muffengrund und die Lippendichtung am Muffenrand befestigt, zum Beispiel daran angeklebt ist. Dann beschränkt sich die Montage auf das bloße Zusammenfügen von Muffe und Spitzende der benachbarten Muffenrohr-Abschnitte ohne jegliche vorangehende Vorbereitung.

Da der Dichtring aus einem wärmebeständigen Fasermaterial besteht, vorzugsweise aus einem druckfesten Vlies oder Gewebe aus Keramik- oder Mineralfasern, hält die erste Dichtung an der thermisch stärker belasteten Stelle im Muffengrund den auftretenden Wärmebelastungen stand. Da ein Hindurchtreten heißer Rauchgase an dem Dichtring weitgehend ausgeschlossen ist, kann für die Lippendichtung in der Nähe des oberen Muffenrandes als elastomeres Material zum Beispiel Silikonkautschuk eingesetzt werden, der Wärmebelastungen bis zu 500° C standhalten kann. Die Lippendichtung übernimmt daher neben der Dichtfunktion in der Hauptsache eine Stabilisierungsfunktion, die für die achsparallele Ausrichtung der Rohrabschnitte sorgt und insbesondere bei einer Mehrzahl von Dichtlippen trotz deren geringer Einzelhaltekraft wirksam ist.

Zur Erleichterung der Arbeitsweise bei der Herstellung der Steckverbindung ist es zweckmäßig, die Lippendichtung aus dem elastomeren Material ähnlich, wie das von der Verbindung von Steinzeugrohren her bekannt ist, zylindrisch mit einem Trägerkörper auszuführen und mit mehreren nach innen gerichteten umlaufenden Dichtlippen zu versehen. Die Dichtlippen liegen beim Steckvorgang an der Umfangsfläche des Spitzendes an und werden im Zuge des Einschiebens des Spitzendes in die Muffe in Richtung zum Muffengrund umgebogen. Sie üben in diesem Zustand die erwünschte Dicht- und Stützwirkung aus.

Auch die Lippendichtung mit einem Trägerkörper kann als bloßes Einlege- oder Steckteil vorgesehen sein, das bei der Montage des Rauchrohrs nur in die Muffe eingefügt zu werden braucht. Zweckmäßig ist es hierbei, an dem Trägerkörper eine Schulter vorzusehen, über welche sich dieser an dem oberen Muffenrand abstützt, so daß ein unerwünschtes Einziehen der Dichtung in den Ringspalt unterbleibt.

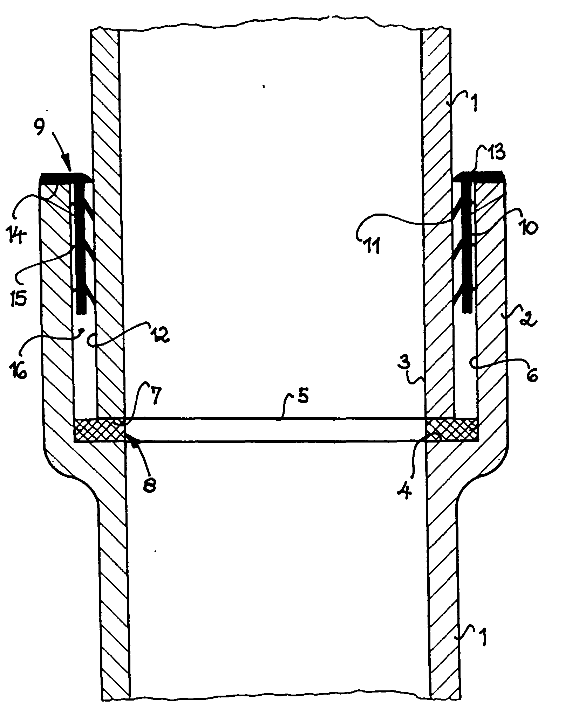

Ein Ausführungsbeispiel der Erfindung ist nachfolgend anhand der beiliegenden Zeichnung näher erläutert.

Die Zeichnung zeigt rein schematisch einen Axialschnitt im Bereich der Verbindungsstelle zwischen zwei Muffenrohr-Abschnitten 1 im zusammengefügten Zustand. Jeder Muffenrohr-Abschnitt 1 weist an seinem - im montierten Zustand des Rauchrohrs - oberen Ende eine Muffe 2 auf, in welche das Spitzende 3 des nächstoberen Muffenrohr-Abschnitts 1 eingefügt ist. Auf dem Muffengrund 4 der Muffe 2 ist ein Dichtring 5 befestigt, z. B. durch Kleben, der sich vom Innenrand des Muffengrunds bis zur Innenwand 6 der Muffe erstreckt. Der Dichtring 5 besteht aus einem relativ hart eingestellten und daher druckfesten Vlies aus Keramik- oder Mineralfaser, das hinreichend elastisch verformbar ist, um mit dem unteren Stirnrand 7 des Spitzendes 3 eine gasdichte Abdichtung zu schaffen. Die durch den Dichtring 5 geschaffene erste Dichtung beschränkt sich somit auf den Bereich der Fuge 8 zwischen dem Muffengrund 4 und dem Stirnrand 7 des Spitzendes 3. Die Elastizität des Dichtrings 5 reicht aus, um auch bei einer gewissen Schrägstellung des oberen Muffenrohr-Abschnitts in Kontakt mit dem Stirnrand 7 zu bleiben.

Im oberen Endbereich der Muffe 2 ist eine zweite Dichtung in Gestalt einer Lippendichtung 9 mit einem zylindrischen Trägerkörper 10 angeordnet, der aus einem elastomeren Material, z. B. Silikonkautschuk, besteht. Der zylindrische Trägerkörper 10 weist an seiner inneren Umfangsfläche mehrere - im Ausführungsbeispiel drei - im unverformten Zustand radiale umlaufende Dichtlippen 11 auf, die radial hinreichend breit sind, um den Abstand zwischen dem Innenumfang des zylindrischen Trägerkörpers 10 und dem Außenumfang 12 des Spitzendes 3 mehr als zu überbrücken und an dem Außenumfang 12 dichtend anzuliegen. Am oberen Ende ist der Trägerkörper 10 einstückig mit einem ebenen Haltering 13 ausgebildet, der mit dem zylindrischen Teil des Trägerkörpers 10 eine Auflageschulter 14 bildet. An der zylindrischen Außenseite des Trägerkörpers 10 sind feine und radial nur wenig vorspringende umlaufende Stützrippen 15 gebildet, über welche sich der Trägerkörper 10 an der Innenwand 6 der Muffe 2 abstützt. Hierdurch ist der Trägerkörper 10 besser geeignet, sich örtlichen Unebenheiten der Außenfläche 12 des Spitzendes anzupassen.

In dem gezeigten Ausführungsbeispiel sind die Stützrippen 15 in Achsrichtung der Lippendichtung 9 auf gleicher Höhe mit den Dichtlippen 11 angeordnet. Abweichend hiervon können die Stützrippen 15 jedoch auch zu den Dichtlippen 11 versetzt angeordnet sein so, daß beispielsweise eine Stützrippe 15 mittig zwischen zwei Dichtlippen 11 liegt. Diese Ausführungsform erweist sich dann als vorteilhaft, wenn der Ringspalt zwischen dem Spitzende 13 und der Muffeninnenwand 6 aufgrund eines entsprechenden Zusammentreffens von Toleranzen eng ist. Die Lippendichtung ist dann in der Lage durch eine wellenartige Verformung des Trägerkörpers 10 an den Stellen der Dichtlippen 11 zusätzlich nachzugeben.

Wie sich aus der Zeichnung ergibt, sind im Fügezustand die Dichtlippen 11 in Richtung zum Muffengrund 4 abgebogen, so daß sie abdichtend und stützend an dem Außenumfang 12 anliegen.

Der Verbindungsvorgang zur Herstellung der Steckverbindung erfordert lediglich das Aufstecken der elastomeren Lippendichtung auf den oberen Muffenrand und das anschließende Einschieben des Spitzendes 3 eines Muffenrohr-Abschnitts 1 bis zum Anstoßen an dem die erste Dichtung bildenden Dichtring 5. Der Teil 13 der elastomeren Lippendichtung 9 verhindert deren Hineinziehen in den Ringspalt 16. Die Abdichtung an dem Dichtring 5 erfolgt durch Eindrücken des Stirnrands 7 in den Dichtring 5 unter der Last der darüber befindlichen Rauchrohrsäule.

Die Erfindung kann auch abweichend von dem vorstehend beschriebenen Ausführungsbeispiel gestaltet sein. So kann die Lippendichtung anstelle an der Muffe auch unmittelbar an dem Spitzende befestigt sein, so daß in diesem Fall die Dichtlippen von dem Spitzende nach außen abstehen. Hierbei ist es zweckmäßig, an dem Spitzende eine an die Form der Lippendichtung angepaßte Nut vorzusehen, in der die Lippendichtung formschlüssig aufgenommen ist, um eine Verschiebung der Lippendichtung beim Einfügen des Spitzendes in die Muffe zu verhindern.

Weiterhin kann anstelle der mehreren gezeigten Dichtlippen 11, die weitgehend radial, das heißt rechtwinklig von dem Trägerkörper 10 abstehen, auch mindestens eine schräg zum Muffengrund weisende Dichtlippe vorgesehen sein. Falls die Lippendichtung an dem Spitzende angebracht ist, weist entsprechend die schräg angeordnete Dichtlippe von dem Muffengrund weg.

Der Begriff Keramin- oder Mineralfasermaterial, der sich auf das für den Dichtring 5 verwendete Material bezieht, erfaßt auch solche Fasermaterialien, die hinreichend wärmebeständig sind und, gegebenenfalls durch eine Zusatzbehandlung, in der hergerichteten Form ausreichende Elastizität aufweisen. Hierbei kann es sich auch um Glasfaser, insbesondere Quarzglasfaser, handeln. Das Fasermaterial kann wie im Ausführungsbeispiel als Wirrfaservlies vorliegen, jedoch auch in Form eines Gewebes. In beiden Fällen kann daran gedacht werden, die Elastizität und Druckfestigkeit sowie gegebenenfalls die Dichteigenschaft durch eine Einbettung in oder Imprägnierung mit Kunststoffmaterial zu beeinflussen. So sind in Kunststoff eingebettete Fasermaterialien hoher Druckfestigkeit und Härte bekannt (Bakelite®). Auch eine Imprägnierung mit Blähglimmer ist möglich, der bei Wärmeeinwirkung expandiert, so daß dadurch der Stirnrand des Spitzendes 3 von dem Dichtring besser umfaßt wird.

## Patentansprüche

1. Rauchrohr eines Kamins, das aus insbesondere keramischen Muffenrohr-Abschnitten (1) aufgebaut ist, wobei die Muffenrohr-Abschnitte an ihren Verbindungsstellen durch eine erste Dichtung (5) in der sich radial erstreckenden Fuge (8) zwischen dem Muffengrund (4) und dem Rand (7) des Spitzendes (3) und durch eine zweite Dichtung aus einem elastomeren Material in dem Ringspalt (16) zwischen der Muffeninnenwand (6) und dem Spitzende (3) abgedichtet sind, **dadurch gekennzeichnet**,
daß die erste Dichtung ein Dichtring (5) aus einem wärmebeständigen Fasermaterial und die zweite Dichtung aus elastomerem Material eine Lippendichtung (9) mit mindestens einer den Ringspalt (16) überbrückenden Dichtlippe (11) ist.

2. Rauchrohr nach Anspruch 1,
**dadurch gekennzeichnet**,
daß der Dichtring (5) an dem Muffengrund befestigt, z. B. angeklebt, ist.

3. Rauchrohr nach Anspruch 1 oder 2,
**dadurch gekennzeichnet**,
daß der Dichtring (5) aus einem druckfesten, gegebenenfalls kunststoffverstärkten Keramik- oder Mineralfaservlies besteht.

4. Rauchrohr nach einem der Ansprüche 1 bis 3,
**dadurch gekennzeichnet**,
daß die zweite Dichtung (9) einen zylindrischen Trägerkörper (10) aufweist, von dem mindestens eine nach innen gerichtete, ringförmig umlaufende Dichtlippe (11) vorspringt.

5. Rauchrohr nach Anspruch 4,
**dadurch gekennzeichnet**, daß der
Trägerkörper (10) an der Muffe gehalten ist und sich über eine Schulter (14) an dem oberen Muffenrand abstützt.

6. Rauchrohr nach einem der Ansprüche 1 bis 5,
**dadurch gekennzeichnet**,
daß die Lippendichtung (9) an der Muffe (2) befestigt, z. B. angeklebt oder aufgesteckt ist.

7. Rauchrohr nach einem der Ansprüche 4 bis 6,
**dadurch gekennzeichnet**,
daß an dem Trägerkörper (10) mehrere nach innen gerichtete Dichtlippen (11) vorgesehen sind.

8. Rauchrohr nach einem der Ansprüche 5 bis 7,
**dadurch gekennzeichnet**,
daß die Dichtlippe (11) bzw. Dichtlippen im unverformten Zustand schräg zum Muffengrund (4) weist bzw. weisen.

9. Rauchrohr nach einem der Ansprüche 1 bis 4,
**dadurch gekennzeichnet**,
daß die Lippendichtung an dem Spitzende (3) angeordnet ist.

10. Rauchrohr nach Anspruch 9,
**dadurch gekennzeichnet**,
daß die Lippendichtung mit ihrem zylindrischen Trägerkörper in einer Nut des Spitzendes formschlüssig aufgenommen ist.

11. Rauchrohr nach Anspruch 9 oder 10,
**dadurch gekennzeichnet**,
daß die Dichtlippe bzw. Dichtlippen im unverformten Zustand schräg von dem Muffengrund wegweist bzw. weisen.

12. Lippendichtung aus elastomerem Material zur Verwendung für die Abdichtung von Rauchrohr-Abschnitten (1) eines Kamins, mit einem zylindrischen Trägerkörper (10), an dessen innerer Umfangsfläche zumindest eine nach innen ragende umlaufende Dichtlippe (11) und an dessen äußerer Umfangsfläche zumindest eine nach außen ragende Stützrippe (15) angeordnet sind.

13. Lippendichtung nach Anspruch 12,
**dadurch gekennzeichnet**,
daß sie mehrere, in Achsrichtung des Trägerkörpers (10) voneinander beabstandete Dichtlippen (11) und Stützrippen (15) aufweist.

14. Lippendichtung nach Anspruch 13,
**dadurch gekennzeichnet**,
daß die Stützrippen (15) axial zu den Dichtlippen (11) versetzt, z. B. jeweils mittig versetzt, angeordnet sind.
